(19) Europäisches Patentamt
European Patent Office
Office européen des brevets

(11) **EP 2 133 232 B1**

(12) **EUROPEAN PATENT SPECIFICATION**

(45) Date of publication and mention
of the grant of the patent:
**07.05.2014 Bulletin 2014/19**

(51) Int Cl.:
**B60L 15/00** *(2006.01)* **B60L 15/20** *(2006.01)*
**B60K 7/00** *(2006.01)* **B60L 11/00** *(2006.01)*
**B62D 11/24** *(2006.01)* **B60W 30/18** *(2012.01)*
**B62D 11/00** *(2006.01)*

(21) Application number: **08173034.3**

(22) Date of filing: **29.12.2008**

(54) **Electric vehicle and control method thereof**

Elektrisches Fahrzeug und Steuerverfahren dafür

Véhicule électrique et son procédé de contrôle

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **13.06.2008 TW 97122039**

(43) Date of publication of application:
**16.12.2009 Bulletin 2009/51**

(73) Proprietor: **Industrial Technology Research
Institute
Chu-Tung, Hsin-Chu (TW)**

(72) Inventors:
• **Peng, Yu-Yin
300, Hsinchu City (TW)**

• **Li, Cheng-Ho
235, Taipei County (TW)**

(74) Representative: **Lang, Christian et al
LangPatent
Anwaltskanzlei
Rosenheimer Strasse 139
81671 München (DE)**

(56) References cited:
**EP-A- 0 982 220** **EP-A- 1 905 675**
**WO-A-95/30569** **US-A- 5 402 344**
**US-A1- 2006 048 976**

**Description**

BACKGROUND OF THE INVENTION

1. Field of the Invention:

The present invention generally relates to an electric vehicle and a control method thereof and, more particularly, to an electric vehicle comprising a free wheel and a method capable of controlling the electric vehicle to prevent poor control, over-steering or sliding to achieve driving safety.

2. Description of the Prior Art:

Since the electric vehicle is power-conservative, environment-friendly, and noise-free, it has attracted tremendous attention from the car industries all over the world. To improve the transmission effieciency, the in-wheel hub motor is often used as a power source of the driving wheel of an electric vehicle so that the motor and the wheel are integrated as one to prevent energy loss and reduce complexity in the conventional gear transmission system. However, since the power source and the rotation rate for each of the driving wheels are independent, a controller is required to deploy the power and rotation rate of each driving wheel so that each of the driving wheels (and other wheels) coordinates with one another dynamically and mechanically when the electric vehicle is moving.

Bayerische Motoren discloses, in U.S. Patent Pub. No. 2008/0040011A1, a control system for a four-wheel-driven motor vehicle having an electronic controller, which determines the rotation rates of all wheels and the vehicle speed, and by which the driving torque of a drive unit can be distributed in a variable manner by way of a controllable transfer clutch to primary driving wheels being permanently connected with the drive unit and to secondary driving wheels being connected with the drive unit. The controller closes the transfer clutch when the slip of a rear wheel exceeds the slip of the front wheel of the same vehicle side by a value which is greater than a given first threshold and when the longitudinal deceleration of the vehicle exceeds a given second threshold or the lateral acceleration of the vehicle exceeds a given third threshold.

In JP2007022301A, Honda Motor Co. LTD. discloses a method for controllong the rotation rate of driving wheels to prevent sliding of the driving wheels. In this method, the expected rotation rate is multiplied by a correction coefficient between 0 and 1 to become a practical rotation rate. From a dynamics point of view, the reduction of the drivibility of the driving wheel that may slide results in prevention of sliding while the driving wheel only provides 80% drivibility with a correction coefficient of 0.8.

In WO2007136122, Toyota Motor Co. LTD. discloses a hybrid vehicle and a method for control power thereof. Two front driving wheels are driven by an engine, while each of two rear driving wheels is driven respectively by an in-wheel hub motor. A controller is used to deploy the torques and the rotation rates of the rear driving wheels and to manage the electric power as well as the engine power so that the engine operates at high efficiencies.

EP 1 905 675 A1 discloses a wheel arrangement for a four-wheeled vehicle comprising a steering wheel, two driving wheels and a free wheel arranged in a rhombus or diamond configuration.

EP 0 982 220 A2 discloses a propulsion motor control apparatus for a three wheel battery fork lift without free wheel.

In DE102007029427A1, GM Global Tech Operations Inc. discloses a method for improving the controllability of a vehicle using electronics-assisted steering by a motor to provide a steering torque to achieve active control assistance.

Accordingly, the aforementioned conventional prior art references reply on complicated transission systems to control the reliability of an electric vehicle without taking advantages of independently driven wheels so that the overall energy efficiency cannot be enhanced. When the driving wheels are independently driven, the theoretical rotation rate of each driving wheel is calculated by a controller to provide respective power. Especially when the electric vehicle is making a turn, it is likely to cause unexpected skidding if the driving wheel is over-driven or insufficiently driven. However, the currently method for calculating the theoretical rotation rate of a driving wheel is inaccurate. Moreo particularly, the method for estimating the instantaneous gyration center of a turning electric vehicle is too simplified so that the difference between the theoretical instantaneous gyration center and the actual instantaneous gyration center is considerable to cause a serious error.

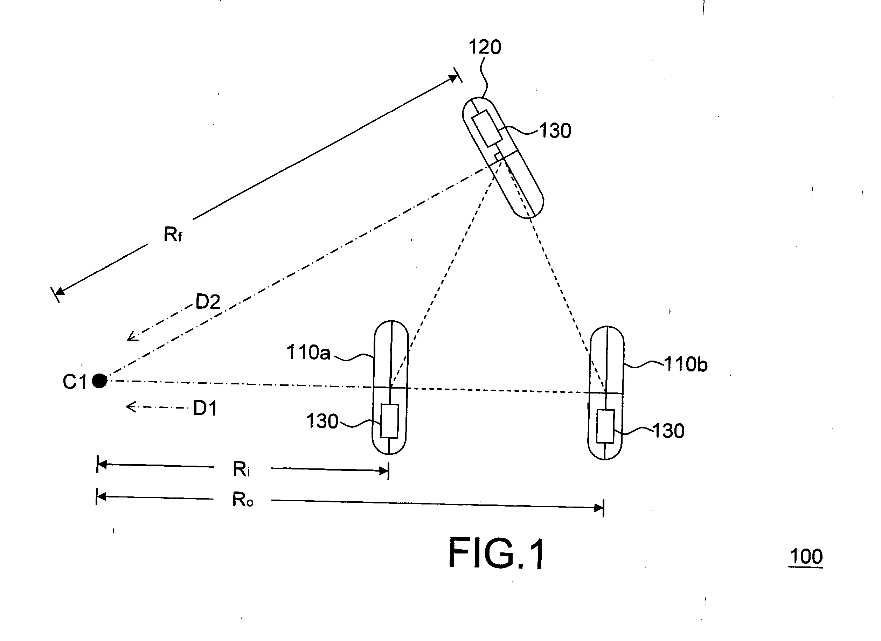

FIG. 1 is a schematic diagram of a conventional electric vehicle. Referring to FIG. 1, the conventional electric vehicle 100 has a three-wheel structure comprising two symmetric driving wheels 110a, 110b and a steering wheel 120. A plurality of sensor units 130 are disposed on the driving wheels 110a, 110b and the steering wheel 120 for sensing the rotation rates of the driving wheels 110a, 110b and the rotation rate and the steering angle of the steering wheel 120.

As previously mentioned, the power sources for the driving wheels 110a and 110b are respectively independent in-wheel hub motors or conventional motors. A controller (not shown) is used for adjusting the power provided by the in-wheel hub motors to control the rotation rates of the driving wheels 110a and 110b. Therefore, the controller is a key unit of the electric vehicle 100, especially when the electric vehicle 100 is making a turn. However, if the controller fails to precisely adjust the rotation rates of the driving wheels 110a and 110b in a reasonable range, the poor control, over-steering or even skidding may happen to the the electric vehicle 100.

More particularly, when a driver (not shown) is driving the electric vehicle 100, he/she turns the hand wheel (not shown) to steer the steering wheel 120, and pushes the pedal (not shown) to input an expected vehicle speed into the controller. Moreover, the rotation rates of the driving wheels 110a, 110b and the rotation rate and the steering angle of the steering wheel 120 are sened by the sensor units 130 and sent to the controller for calculation.

When the electric vehicle 100 is moving straight forward, the expected vehicle speed input by the driver can be transformed into the theoretical rotation rates of the driving wheels 110a, 110b. If the theoretical rotation rates of the driving wheels 110a, 110b are not equal to the actual rotation rates of the driving wheels 110a, 110b sensed by the sensor units 130, the controller adjusts the switch of the in-wheel hub motor so that the rotation rates of the driving wheels 110a, 110b reach the theoretical rotation rates of the driving wheels 110a, 110b.

However, when the electric vehicle 100 is making a turn, the theoretical rotation rates of the driving wheels 110a, 110b become more complicated. Generally, in the prior art, the rotation rate of the steering wheel 120 is converted into the speed of the electric vehicle 100, and the expected vehicle speed corresponding to the rotation rate of the steering wheel 120 input by the driver is regarded as a gain value to adjust the switch. Then, the instantaneous gyration center is determined to calculate the theoretical rotation rates of the driving wheels 110a, 110b according to the rotation rate of the steering wheel 120.

Conventionally, the instantaneous gyration center C1 is determined by intersecting D1 and D2, where D1 denotes the direction of the connection between the driving wheels 110a, 110b and D2 denotes the normal direction of the steering wheel 120.

Consequenyly, the theoretical rotation rates $\omega_i^t$, $\omega_o^t$ of the driving wheels 110a, 110b can be calculated according to the following equations:

$$\omega_i^t = \omega_f \frac{R_i}{R_f} \qquad - \qquad (1)$$

$$\omega_o^t = \omega_f \frac{R_o}{R_f} \qquad\qquad (2)$$

wherein $\omega_T$ is the rotation rate of the steering wheel 120, and $R_f$, $R_i$, $R_o$ are the distances from the instantaneous gyration center C1 to the steering wheel 120, the driving wheel 110a and the driving wheel 110b, respectively. In other words, the theoretical rotation rate $\omega_i^t$ of the driving wheel 110a is equal to the rotation rate $\omega_f$ of the steering wheel 120 multiplied by the distance $R_i$ between the driving wheel 110a and the instantaneous gyration center C1, then divided by the distance $R_f$ between the driving wheel 110a and the instantaneous gyration center C1. The theoretical rotation rate $\omega_o^t$ of the driving wheel 110b is equal to the rotation rate $\omega_f$ of the steering wheel 120 multiplied by the distance $R_o$ between the driving wheel 110b and the instantaneous gyration center C1, then divided by the distance $R_f$ between the driving wheel 110a and the instantaneous gyration center C1.

As a result, the controller is capable of calculating the theoretical rotation rates $\omega_i^t$, $\omega_o^t$ of the driving wheels 110a, 110b and adjusting the switch of the in-wheel hub motor to control the rotation rates of the driving wheels 110a, 110b according to the expected vehicle speed corresponding to the rotation rate gain of the steering wheel 120.

However, the afore-mentioned calculation depends on impractical assumptions, which results in considerable amount of errors. First, in the prior art, the rotation rate of the steering wheel 120 multiplied by the circumference of the steering wheel 120 is regarded as the actual speed of the electric vehicle 100. However, since the steering wheel 120 is not free steering but is controlled by the driver when it is moving, there is an error between the rotation rate of the steering wheel 120 multiplied by the circumference of the steering wheel 120 and the actual speed of the electric vehicle 100.

Moreover, since the driving wheels 110a, 110b cannot be steered, in the prior art, the instantaneous gyration center C1 is determined by intersecting D1 and D2, where D1 denotes the direction of the connection between the driving wheels 110a, 110b and D2 denotes the normal direction of the steering wheel 120. However, such an instantaneous gyration center C1 is considerably different from the actual instantaneous gyration center of the electric vehicle 100.

Consequently, the theoretical rotation rates $\omega_i^t$, $\omega_o^t$ calculated according to the instantaneous gyration center C1 can be erroneous (referring to equations (1) and (2)). More particularly, the instantaneous gyration center C1 is determined only by the state of the steering wheel 120 without considering the speed of the electric vehicle 100 or the like. Therefore, as the steering angle of the steering wheel 120 is a constant, an error may occur because the instantaneous gyration center C1 is located at the same position no matter how fast the speed of the electric vehicle 100 is.

Moreover, as the steering angle of the steering wheel 120 becomes larger, the theoretical rotation rates $\omega_i^t$, $\omega_o^t$ become more erroneous to cause sliding when the electric vehicle 100 is making a turn.

## SUMMARY OF THE INVENTION

The present invention provides an electric vehicle and a control method capable of controlling the electric vehicle to prevent poor control, over-steering or skidding to achieve enhanced driving safety.

In one embodiment, the present invention provides an electric vehicle, comprising: two driving wheels, having an independent power source, respectively; a steering wheel, being capable of steering under control; a free wheel, having a rotation rate and being capable of free steering according to the movement of the electric vehicle; a controller, being capable of adjusting the power from the power sources of the driving wheels; and a plurality of sensor units, being capable of sensing and transferring the rotation rates of the driving wheels, the steering angle of the steering wheel and the rotation rate and the steering angle of the free wheel to the controller; wherein the controller adjusts the power from the power sources of the driving wheels by calculating the parameters like the rotation rates of the driving wheels and the free wheel, and an instantaneous gyration center of the electric vehicle is determined by the steering angle of the steering wheel and the steering angle of the free wheel.

In another embodiment, the present invention provides an electric vehicle, two driving wheels, having an independent power source, respectively, and being capable of steering under control; a free wheel, having a rotation rate and being capable of steering according to the movement of the electric vehicle; a controller, being capable of adjusting the power from the power sources of the driving wheels; and a plurality of sensor units, being capable of sensing and transferring the rotation rates of the driving wheels, the steering angles of the driving wheels and the rotation rate and the steering angle of the free wheel to the controller; wherein the controller adjusts the power from the power sources of the driving wheels by calculating the parameters like the rotation rates of the driving wheels and the free wheel, and an instantaneous gyration center of the electric vehicle is determined by the average steering angle of the driving wheels and the steering angle of the free wheel.

In one embodiment, the present invention provides a control method capable of controlling an electric vehicle comprising two driving wheels, a steering wheel, a free wheel and a controller, the control method comprising: inputting an expected vehicle speed into the controller; sensing the steering angle of the steering wheel, the rotation rates of the driving wheels and the steering angle and the rotation rate of the free wheel; determining an instantaneous gyration center of the electric vehicle according to the steering angle of the steering wheel and the steering angle of the the free wheel; calculating the theoretical rotation rates of the driving wheels; and adjusting the power from the power sources of the driving wheels to control the rotation rates of the driving wheels.

In another embodiment, the present invention provides a control method capable of controlling an electric vehicle comprising two driving wheels, a steering wheel, a free wheel and a controller, the control method comprising: inputting an expected vehicle speed into the controller; sensing the steering angles and the rotation rates of the driving wheels and the steering angle and the rotation rate of the free wheel; determining an instantaneous gyration center of the electric vehicle according to the average steering angle of the driving wheels and the steering angle of the the free wheel; calculating the theoretical rotation rates of the driving wheels; and adjusting the power from the power sources of the driving wheels to control the rotation rates of the driving wheels.

Accordingly, in the electric vehicle and the control method thereof of the present invention, a free wheel capable of free steering is disposed to operate with a steering wheel (or a driving wheel capable of steering) to precisely define an instantaneous gyration center so that a controller is capable of adjusting the power from the power sources of the driving wheels according to the theoretical rotation rates of the driving wheels. Moreover, since the free wheel is capable of free steering, the rotation rate of the free wheel precisely corresponds to the speed of the electric vehicle. Therefore, the conroller adjusts the rotation rate of each driving wheel, respectively, to prevent poor control, over-steering or sliding to achieve driving safety.

BRIEF DESCRIPTION OF THE DRAWINGS

The objects, spirits and advantages of the preferred embodiments of the present invention will be readily understood by the accompanying drawings and detailed descriptions, wherein:

FIG. 1 is a schematic diagram of a conventional electric vehicle;

FIG. 2A to FIG. 2B are schematic diagrams of an electric vehicle according to one embodiment of the present invention;

FIG. 3A to FIG. 3B are schematic diagrams of an electric vehicle according to another embodiment of the present invention;

FIG. 4A is a flowchart of a control method of an electric vehicle according to one embodiment of the present invention; and

FIG. 4B is a flowchart of a control method of an electric vehicle according to another embodiment of the present invention.

DETAILED DESCRIPTION OF THE PREFERRED EMBODIMENT

The present invention can be exemplified but not limited by the embodiments as described hereinafter.

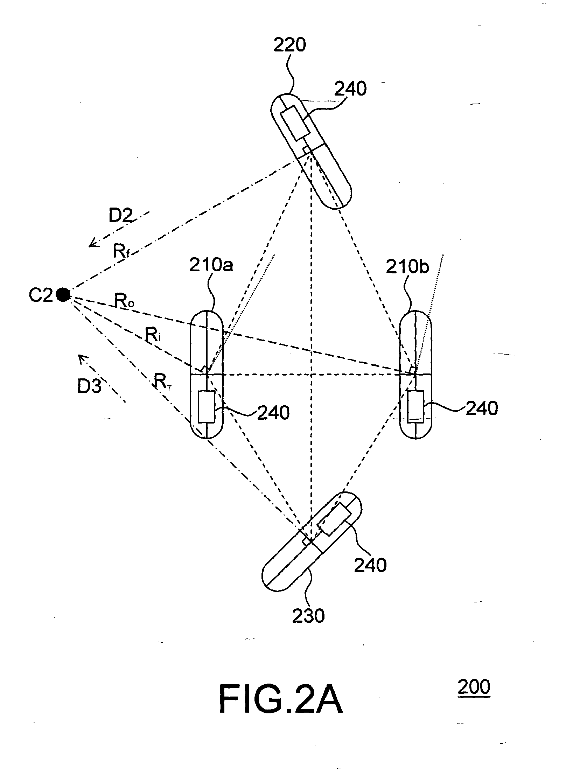

Please refer to FIG. 2A, which is a schematic diagram of an electric vehicle according to one embodiment of the present invention. Referring to FIG. 2A, the electric vehicle 200 of the present invention comprises two driving wheels 210a, 210b, a steering wheel 220, a free wheel 230, a controller (not shown) and a plurality of sensor units 240. The present invention is **characterized in that** the electric vehicle 200 has a plurality of independently controlled wheels. More particularly, the electric vehicle 200 comprises at least two driving wheels 210a, 210b with respective power sources. In the present embodiment, the electric vehicle 200 comprises two driving wheels 210a, 210b. However, the present invention is not limited to the number of the driving wheels, especially for large electric vehicle, which may comprise more than three driving wheels.

As mentioned above, the power sources of the respective driving wheels 210a, 210b are, for example, in-wheel hub motors or conventional motors that are independently controlled by a controller so as to adjust the rotation rates of the driving wheels 210a, 210b. Since the electric vehicle of the present invention is not equipped with conventional transmission device such as a transmission shaft, the energy efficiency can be enhanced. It is also noted that the present invention is not limited to the power sources of the driving wheels 210a, 210b. For example, the power sources can also be motors or the like to drive the driving wheels through belts or roller chain.

The steering wheel 220 is for steering when it is under control by the driver. Generally, the driver steers the hand wheel (not shown) to steer the steering wheel 220 through a mechanical interlocking device. However, the present invention is not limited to whatever mechanism that controls the steering wheel 220. Moreover, the free wheel 230 can be implemented using an idle wheel to exhibit the corresponding rotation rate and steering angle according to practical conditions. In other words, as the electric vehicle 200 is moving or steering, the free wheel 230 exhibits the corresponding rotation rate and steering angle according to the status of the electric vehicle 200.

In the present embodiment, the steering wheel 220 enables the electric vehicle 200 to turn left when the steering angle is about 30°. The free wheel 230 is driven by the electric vehicle 200 to turn right by 45°. When the electric vehicle 200 turns by a different angle at a different speed, the free wheel 230 exhibits the corresponding rotation rate and steering angle.

As a result, in the present invention, the instantaneous gyration center C2 of the electric vehicle 200 can be determined according to the steering angle of the steering wheel 220 and the steering angle of the free wheel 230. The instantaneous gyration center C2 is determined by intersecting D3 and D2, where D3 denotes the normal direction of the free wheel 230 and D2 denotes the normal direction of the steering wheel 220. In the present invention, the free wheel 230 is disposed to reflect the status of the electric vehicle 200 to determine the location of the instantaneous gyration center C2. Therefore, in the present invention, the location of the instantaneous gyration center C2 is much more accurate than the conventional instantaneous gyration center C1 (as shown in FIG. 1) so as to conform to the practical conditions when the electric vehicle 200 is making a turn.

Moreover, compared to the prior art wherein the rotation rate of the steering wheel 120 corresponds to the actual speed of the electric vehicle 100 (as shown in FIG. 1), the present invention is **characterized in that** the rotation rate of the free wheel 230 corresponds to the actual speed of the electric vehicle 200. Since the rotation rate and the steering angle of the free wheel 230 can be adjusted according to the status of the electric vehicle 200, the rotation rate of the free wheel 230 corresponds more accurately to the actual speed of the electric vehicle 200.

Accordingly, in the present invention, the theoretical rotation rates of the driving wheels 210a, 210b can be calculated (with error much smaller than the theoretical rotation rates in the prior art) according to the rotation rate of the free wheel 230 and the instantaneous gyration center C2 to reflect the status of the electric vehicle 200 and prevent poor control, over-steering and sliding.

In order for the controller to perform calculation according to the aforementioned parameters, in the present invention, a plurality of sensor units 240 are used to sense the rotation rates of the driving wheels 210a, 210b, the steering angle of the steering wheel 220, the steering angle of the free wheel 230 and the rotation rate of the free wheel 230. These parameters are transferred to the controller for calculation. These sensor units 240 are respectively disposed on driving wheels 210a, 210b, the steering wheel 120 and the free wheel 230.

As mentioned previously, the driver controls the steering wheel 220 and inputs the expected vehicle speed to the controller. In the present invention, the rotation rate of the free wheel 230 corresponds to the speed of the electric vehicle 200 and the expected vehicle speed input by the driver corresponds to the rotation rate of the free wheel 230 as a gain value for adjusting the switch. Then, the instantaneous gyration center C2 is determined to calculate the theoretical rotation rate of the driving wheels 210a, 210b according to the rotation rate of the free wheel 230. The controller adjusts the switch of the in-wheel hub motor to control the rotation rates of the driving wheels 210a, 210b according to expected vehicle speed corresponding to the rotation rate of the free wheel 230 regarded as a gain value and the rotation rates of the driving wheels 210a, 210b (acquired by the sensor units 240). The calculation of the theoretical rotation rates of the driving wheels 210a, 210b is described hereinafter:

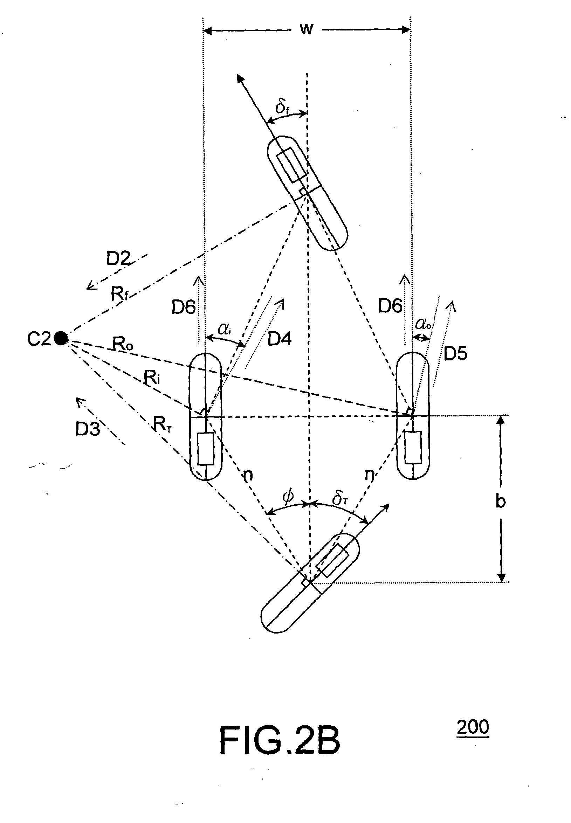

FIG. 2A to FIG. 2B are schematic diagrams of an electric vehicle according to one embodiment of the present invention. For clarity, in FIG. 2B, a plurality of auxiliary lines and angles are presented based on FIG. 2A. Referring to FIG. 2A to 2B, the driving wheels 210a, 210b and the steering wheel 220 are disposed similarly to the electric vehicle 100 in FIG. 1 so that the present embodiment can be compared to the priort art. In the present embodiment, the free wheel 230 is disposed at the rear end of the central line of the electric vehicle 200. However, the present invention is not limited to such arrangement of the wheels. Those with ordinary skill in the art can make modifications according to the description within the scope of the present invention.

As stated above, the sensor units 240 send parameters such as the rotation rates of the driving wheels 210a, 210b, the steering angle $\delta_f$ of the steering wheel 220, the steering angle $\delta_T$ of the free wheel 230 and the rotation rate $\omega_T$ of the free wheel 230 to the controller. Therefore, these parameters are known. Moreover, the distance $w$ between the driving wheels 210a, 210b, the distance $b$ from the free wheel 230 to the middle point between the driving wheels 210a, 210b and the distance $n$ from the free wheel 230 to the center of each of the driving wheels 210a, 210b are known,

wherein $n = \sqrt{(w/2)^2 + b^2}$ .

The instantaneous gyration center C2 is determined by intersecting D3 and D2, where D3 denotes the normal direction of the free wheel 230 and D2 denotes the normal direction of the steering wheel 220. Therefore, as the steering angle $\delta_f$ of the steering wheel 220 and the steering angle $\delta_T$ of the free wheel 230 are known, the distances $R_f$, $R_T$ from the steering wheel 220 and the free wheel 230 to the instantaneous gyration center C2 can be acquired based on their geometrical relations:

$$R_T = \frac{L \cos\delta_f}{\sin(\delta_f + \delta_T)} \tag{3}$$

$$R_f = \frac{L \cos\delta_T}{\sin(\delta_f + \delta_T)} \tag{4}$$

According to the instantaneous center method in dynamics, the theoretical rotation rates $\omega_i^t$, $\omega_o^t$ of the driving wheels 210a, 210b can be derived from the rotation rate $\omega_T$ of the free wheel 230:

$$\omega_i^t = \omega_T \frac{R_i}{R_T}\cos\alpha_i \tag{5}$$

$$\omega_o^t = \omega_T \frac{R_o}{R_T}\cos\alpha_o \tag{6}$$

wherein $R_i$, $R_o$ are respectively the distances from the driving wheels 210a, 210b to the instantaneous gyration center C2, and $\alpha_i$, $\alpha_o$ are respectively the angles between the tangential direction of the centrode of the driving wheels 210a, 210b and the traveling direction of the electric vehicle. In other words, the theoretical rotation rate $\omega_i^t$ of the driving wheel 210a is equal to the rotation rate $\omega_T$ of the free wheel 230 multiplied by the distance $R_i$ from the driving wheel 210a to the instantaneous gyration center C2, divided by the distance $R_T$ from the free wheel 230 to the instantaneous gyration center C2, and then multiplied by the cosine of the angle $\alpha_i$ between the tangential direction D4 of the centrode of the driving wheel 210a and the traveling direction D6 of the electric vehicle 200. Similarly, the theoretical rotation rate $\omega_o^t$ of the driving wheel 210b is equal to the rotation rate $\omega_T$ of the free wheel 230 multiplied by the distance $R_o$ from the driving wheel 210b to the instantaneous gyration center C2, divided by the distance $R_T$ from the free wheel 230 to the instantaneous gyration center C2, and then multiplied by the cosine of the angle $\alpha_o$ between the tangential direction D5 of the centrode of the driving wheel 210b and the traveling direction D6 of the electric vehicle 200.

In equations (5) and (6), the distances $R_i$, $R_o$ and the angles $\alpha_i$, $\alpha_o$ are derived according to their geometrical relations:

$$R_i = \sqrt{R_T^2 + n^2 - 2R_T \cdot n \cdot \cos\left(\frac{\pi}{2} - \delta_T - \phi\right)} \tag{7}$$

$$R_o = \sqrt{R_T^2 + n^2 - 2R_T \cdot n \cdot \cos\left(\frac{\pi}{2} - \delta_T + \phi\right)} \tag{8}$$

$$\alpha_i = \delta_T - \sin^{-1}\frac{b\sin\left(\frac{\pi}{2} - \delta_T - \phi\right)}{R_i} \tag{9}$$

$$\alpha_o = \delta_T - \sin^{-1}\frac{b\sin\left(\frac{\pi}{2} - \delta_T + \phi\right)}{R_i} \tag{10}$$

wherein $\phi = \tan^{-1}(w/2b)$.

It is noted that, in the present embodiment, the free wheel 230 and the driving wheels 210a, 210b have the same diameter. However, if the free wheel 230 and the driving wheels 210a, 210b have different diameters, equations (5) and (6) are modified by multiplying the diameter ratio between the free wheel 230 and the driving wheels 210a, 210b, which is readily understood by those with ordinary skill in the art.

Moreover, in the present embodiment, the steering wheel 220 is not equipped with a power source. However, in other embodiments, the steering wheel 220 comprises an indepedent power source (for example, an in-wheel hub motor or a conventional motor) controlled by a controller, like the driving wheels 210a, 210b. Therefore, the sensor unit 240 is capable of sensing the rotation rate of the steering wheel 220 and sending the information to the controller to calculate the theoretical rotation rate $\omega_f^t$ of the steering wheel 220 according to expected vehicle speed corresponding to the rotation rate of the free wheel 230 regarded as a gain value and the rotation rate of the steering wheel 220 (acquired by the sensor unit 240) so as to adjust the switch of the in-wheel hub motor to control the rotation rate of the steering wheel 220.

Certainly, the theoretical rotation rate $\omega_f^t$ of the steering wheel 220 can be acquired by the instantaneous center method:

$$\omega_f^t = \omega_{T'} \frac{R_f}{R_T} \qquad (11)$$

In the present embodiment, a conventional three-wheel electric vehicle is equipped with an additional free wheel. The present invention is **characterized in that** the instantaneous gyration center of the electric vehicle is determined based on the steering by the steering wheel and the free wheel. Moreover, the theoretical rotation rates of the driving wheels are calculated based on the rotation rate (that corresponds to the speed of the electric vehicle) of the free wheel so that the controller adjusts the power from the power source of the driving wheel. Those with ordinary skill in the art can make modifications (such as four-wheel, five-wheel structures for the electric vehicle) within the scope of the present invention.

Furthermore, in the present invention, the steering wheel can be omitted as described in another embodiment. For clarity, however, similar labels denote similar elements.

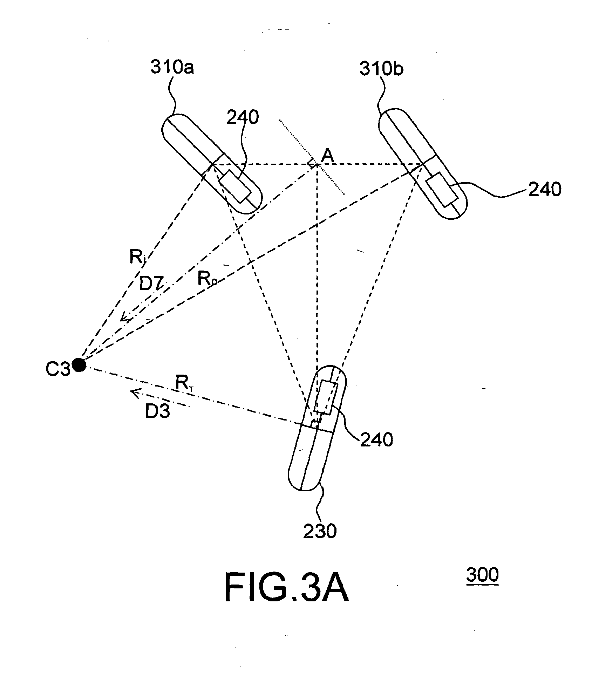

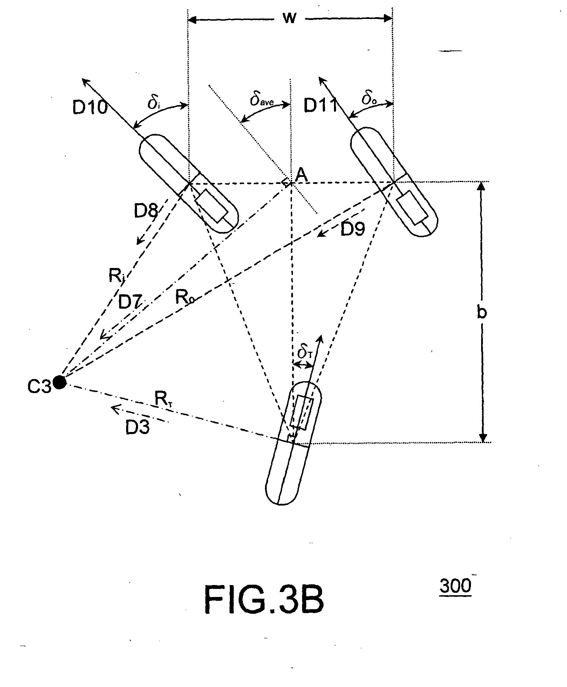

FIG. 3A to FIG. 3B are schematic diagrams of an electric vehicle according to another embodiment of the present invention. For clarity, in FIG. 3B, a plurality of auxiliary lines and angles are presented based on FIG. 3A. Referring to FIG. 3A to 3B, the electric vehicle comprising 300 comprises two driving wheels 310a, 310b, a free wheel 230, a controller (not shown) and a plurality of sensor units 240. The electric vehicle 300 is similar to the electric vehicle 200 in the previous embodiment in FIG. 2A to 2B, except that the electric vehicle 300 does not comprise the steering wheel. For the electric vehicle 300, the driving wheels 310a, 310b capable of steering under the control of the driver and the sensor units 240 are capable of sensing the steering angles $\delta_i$, $\delta_o$ of the driving wheels 310a, 310b and sending the information to the controller.

In vehicle dynamics, when two wheels at symmetric locations are steering, the steering angles of the two wheels are not the same so as to keep the vehicle balanced. Therefore, when the two wheels are considered as one, the equivalent position will be located at the middle point between the two wheels and the steering angles of the two wheels are averaged to obtain an average steering angle.

Therefore, in the present embodiment, the middle point A between the driving wheels 310a, 310b denotes the driving wheels 310a, 310b as one and the average steering angle $\delta_{ave}$ denotes the steering angle of the driving wheels 310a, 310b as one, wherein $\delta_{ave} = (\delta_i + \delta_o)/2$.

Similarly, in the present embodiment, the instantaneous gyration center C3 is determined according to the steering angles of the free wheel 230 and the driving wheels 310a, 310b. More particularly, the instantaneous gyration center C3 is determined by intersecting D7 and D3, where D7 denotes the normal direction of the driving wheels 310a, 310b as one that extends from the middle point A between the driving wheels 310a, 310b and D3 denotes the normal direction of the free wheel 230.

Since the sensor units 240 are capable of sensing the steering angles $\delta_i$, $\delta_o$ of the driving wheels 310a, 310b, the rotation rates of the driving wheels 310a, 310b, the steering angle $\delta_T$ of the free wheel 230 and the rotation rate $\omega_T$ of the free wheel 230, these parameters are known. Moreover, the distance $w$ between the driving wheels 210a, 210b, and the distance $b$ from the free wheel 230 to the middle point A are known.

The instantaneous gyration center C3 is determined by intersecting D3 and D7, where D3 denotes the normal direction of the free wheel 230 and D7 denotes the normal direction of the driving wheels 310a, 310b as one. Therefore, as the average steering angle $\delta_{ave}$ of the driving wheels 310a, 310b and the steering angle $\delta_T$ of the free wheel 230 are known, the distance $R_T$ from the free wheel 230 to the instantaneous gyration center C3 can be acquired based on their geometrical relations:

$$R_T \cong b \cdot \cot \delta_T + \frac{w}{2} - \frac{\delta_T}{\pi/2} [b \cdot (\cot \delta_T - 1) + \frac{w}{2}] \qquad (12)$$

Similarly, according to the instantaneous center method in dynamics, the theoretical rotation rates $\omega_i^t$, $\omega_o^t$ of the driving wheels 310a, 310b can be derived respectively from the rotation rate $\omega_T$ of the free wheel 230:

$$\omega_i^t = \omega_T \frac{R_i}{R_T} \qquad (13)$$

$$\omega_o^t = \omega_T \frac{R_o}{R_T} \qquad (14)$$

wherein $R_i$, $R_o$ are respectively the distances from the driving wheels 310a, 310b to the instantaneous gyration center C3. In other words, the theoretical rotation rate $\omega_i^t$ of the driving wheel 310a is equal to the rotation rate $\omega_T$ of the free wheel 230 multiplied by the distance $R_t$ from the driving wheel 310a to the instantaneous gyration center C3, and divided by the distance $R_T$ from the free wheel 230 to the instantaneous gyration center C3. Similarly, the theoretical rotation rate $\omega_o^t$ of the driving wheel 310b is equal to the rotation rate $\omega_T$ of the free wheel 230 multiplied by the distance $R_o$ from the driving wheel 310b to the instantaneous gyration center C3, and divided by the distance $R_T$ from the free wheel 230 to the instantaneous gyration center C3.

In equations (13) and (14), the distances $R_i$, $R_o$ are derived according to their geometrical relations:

$$R_i \cong \frac{b}{\sin \delta_i} - \frac{\delta_T}{\pi/2} (\frac{b}{\sin \delta_i} - \frac{w}{2}) \qquad (15)$$

$$R_o \cong \frac{b}{\sin \delta_o} - \frac{\delta_T}{\pi/2} (\frac{b}{\sin \delta_o} - \frac{w}{2}) \qquad (16)$$

It is noted that, even though the directions D8, D9 from the driving wheels 310a, 310b towards the instantaneous gyration center C3 are not exactly perpendicular to the tangential direction D10, D11 of the centrode of the driving wheel 310a, the directions D8, D9 are almost perpendicular to the direction D10, D11, respectively. Therefore, in equations (13) and (14), the cosine terms are omitted (with reference to equations (5) and (6)). Those with ordinary skill in the art can precisely calculate the theoretical rotation rates $\omega_i^t$, $\omega_o^t$ of the driving wheels 310a, 310b according to the description stated above considering the cosine terms.

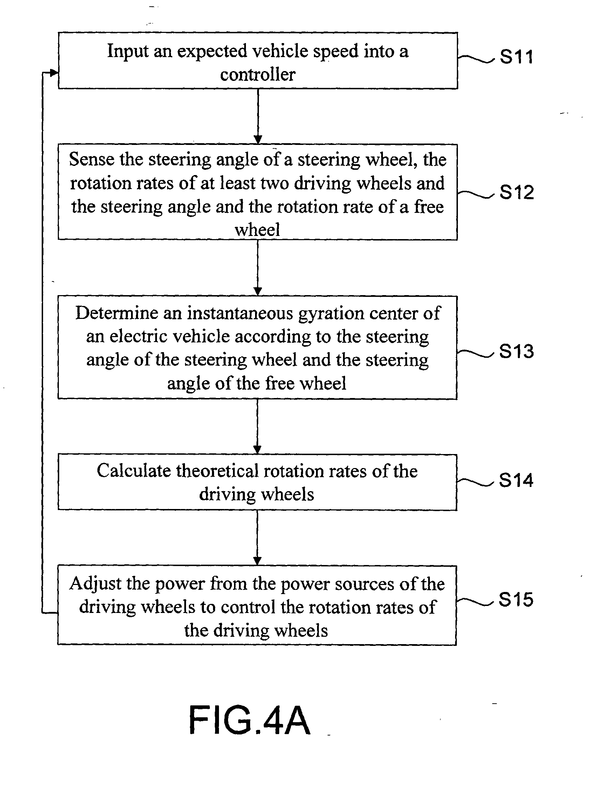

The method for control the electric vehicle has been presented while describing the structure of the electric vehicle. However, to make the present invention more readily understood by those with ordinary skill in the art, FIG. 4A provides a flowchart of a control method of an electric vehicle according to one embodiment of the present invention, wherein the control method corresponds to the electric vehicle in FIG. 2A. Referring to FIG. 4A and FIG. 2A, in Step S11, the driver inputs an expected vehicle speed to the controller. The driver inputs the expected vehicle speed to the controller by pushing the pedal. Then in Step S12, the sensors 240 sense the steering angle of the steering wheel 220, the rotation rates of the driving wheels 210a, 210b and the steering angle and the rotation rate of the free wheel 230 and send these parameters to the controller.

As stated in Step S13 and Step S14, the controller determines the instantaneous gyration center C2 according to the steering angle of the steering wheel 220 and the steering angle of the free wheel 230, and then the theoretical rotation rates of the driving wheels 210a, 210b are calculated according to the instantaneous center method. More particularly, the instantaneous gyration center C2 is defined by intersecting the normal direction of the free wheel and the normal direction of the steering wheel.

Then, in Step S15, the controller adjusts the power from the power sources of the driving wheels 210a, 210b to control the rotation rates of the driving wheels 210a, 210b. If the electric vehicle keeps on moving, the method returns to Step 11 after Step 15 is completed.

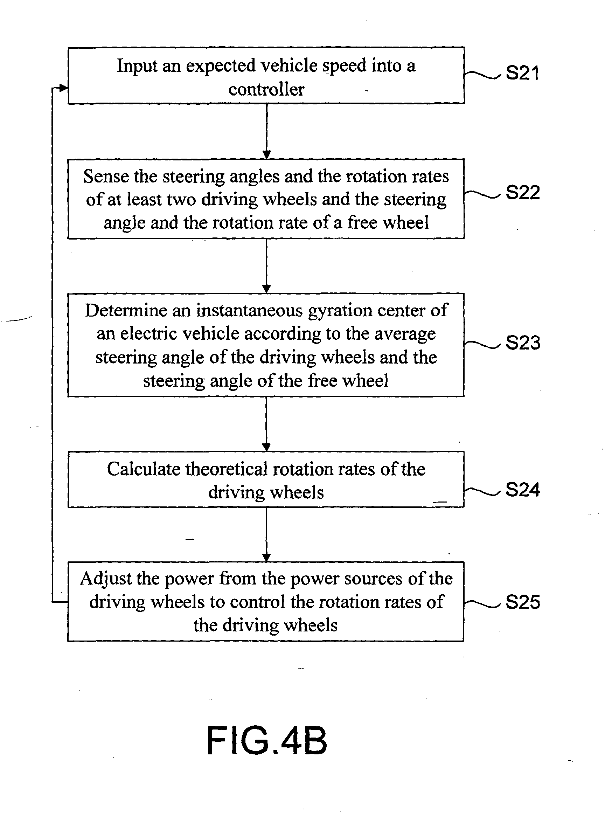

FIG. 4B is a flowchart of a control method of an electric vehicle according to another embodiment of the present invention, wherein the control method corresponds to the electric vehicle in FIG. 3A. Referring to FIG. 4B and FIG. 3A, in Step S21 and Step S22, the driver inputs an expected vehicle speed to the controller and the sensors 240 sense the steering angles and the rotation rates of the driving wheels 310a, 310b, and the steering angle and the rotation rate of the free wheel 230 and send these parameters to the controller.

As stated in Step S23 and Step S24, the controller determines the instantaneous gyration center C3 according to the average steering angle of the driving wheels 310a, 310b and the steering angle of the free wheel 230, and then the theoretical rotation rates of the driving wheels 310a, 310b are calculated according to the instantaneous center method. More particularly, the instantaneous gyration center C3 is defined by intersecting the average normal direction of the driving wheels 310a, 310b and the normal direction of the free wheel 230.

Then, in Step S25, the controller adjusts the power from the power sources of the driving wheels 310a, 310b to control the rotation rates of the driving wheels 310a, 310b. If the electric vehicle keeps on moving, the method returns to Step 21 after Step 25 is completed.

As stated above, the electric vehicle and the method for controlling the electric vehicle of the present invention have advantages hereinafter:

1. With the free wheel capable of free steering and the steering wheel (or the driving wheel capable of steering), the position of the instantaneous gyration center can be precisely determined so that the controller can calculate the theoretical rotation rate of the driving wheel to the power from the power source of the adjust driving wheel.

2. Since the free wheel is capable of free steering, the rotation rate of the free wheel can correspond to the speed of the electric vehicle. Accordingly, the controller can adjust the rotation rate of respective driving wheels so as to prevent poor control, over-steering and sliding to achieve driving safety.

Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

**Claims**

1. An electric vehicle (200), comprising:

two driving wheels (210a, 210b), having an independent power source, respectively;
a steered wheel (220), being capable of steering under control;
a free wheel (230), having a rotation rate and being capable of free steering according to the movement of the electric vehicle (200);
a controller, being capable of adjusting the power from the power sources of the driving wheels (210a, 210b) and receiving an expected vehicle speed; and
a plurality of sensor units (240), being capable of sensing and transferring the rotation rates of the driving wheels (210a, 210b), the steering angle ($\delta_f$) of the steered wheel (220) and the rotation rate and the steering angle ($\delta_T$) of the free wheel (230) to the controller, wherein the rotation rate of the free wheel (230) corresponds to a speed of the electric vehicle (200) and the expected vehicle speed corresponds to the rotation rate of the free wheel (230) as a gain value for adjusting a switch of the power source;
wherein the controller adjusts the power from the power sources of the driving wheels (210a, 210b) by calculating the parameters like the rotation rates of the driving wheels (210a, 210b) and the free wheel (230), and an instantaneous gyration center of the electric vehicle (200) is determined by the steering angle ($\delta_f$) of the steered wheel (220) and the steering angle ($\delta_T$) of the free wheel (230), wherein a theoretical rotation rate of each driving wheel (210a, 210b) is calculated according to the instantaneous gyration center (C2) and the rotation rate of the free wheel (230), and the controller controls the rotation rates of the driving wheels (210a, 210b) according to the expected vehicle speed corresponding to the rotation rate of the free wheel (230) regarded as a gain value and the rotation rates of the driving wheels (210a, 210b) aquired by the sensor units (240).

2. The electric vehicle (200) as recited in claim 1, wherein the power sources of the driving wheels (210a, 210b) are conventional motors or in-wheel hub motors.

3. The electric vehicle (200) as recited in claim 1, wherein the normal direction (D3) of the free wheel (230) that is rotating and the normal direction (D2) of the steered wheel (220) that is rotating are extended to intersect to define the instantaneous gyration center (C2).

4. The electric vehicle (200) as recited in claim 1, wherein the theoretical rotation rate of each of the driving wheels (210a, 210b) is equal to the rotation rate of the free wheel (230) multiplied by the distance ($R_i$) between the driving wheel (210a) and the instantaneous gyration center (C2), then divided by the distance ($R_T$) between the free wheel (230) and the instantaneous gyration center (C2) and then multiplied by the cosine of the angle ($\alpha$) between the tangential direction (D4) of the centrode of the driving wheel (210a) and the traveling direction (D6) of the electric vehicle (200).

5. The electric vehicle (200) as recited in claim 1, wherein the steered wheel (220) further comprises an independent power source, the sensor units (240) are capable of sensing the rotation rate of the steered wheel (220), the controller adjusts the power from the power source of the steered wheel (220) by calculating the parameters like the rotation rates of the steered wheel (220) and the free wheel (230), and the theoretical rotation rate of the steered wheel (220) is calculated based on an instantaneous center method to adjust the power from the power source of the steered wheel (220), the power source being an in-wheel hub motor or a conventional motor.

6. The electric vehicle (200) as recited in claim 5, wherein the theoretical rotation rate of the steered wheel (220) is equal to the rotation rate of the free wheel (230) multiplied by the distance ($R_f$) between the steered wheel (220) and the instantaneous gyration center (C2), and then divided by the distance ($R_T$) between the free wheel (230) and the instantaneous gyration center (C2).

7. An electric vehicle (300), comprising:

two driving wheels (310a, 310b), having an independent power source, respectively, and being capable of steering under control;
a free wheel (230), having a rotation rate and being capable of steering according to the movement of the electric vehicle (300);
a controller, being capable of adjusting the power from the power sources of the driving wheels (310a, 310b) and receiving an expected vehicle speed; and
a plurality of sensor units (240), being capable of sensing and transferring the rotation rates of the driving wheels (310a, 310b), the steering angles ($\delta_i$, $\delta_0$) of the driving wheels (3110a, 310b) and the rotation rate and the steering angle ($\delta_T$) of the free wheel (230) to the controller, wherein the rotation rate of the free wheel (230) corresponds to a speed of the electric vehicle (300) and the expected vehicle speed corresponds to the rotation rate of the free wheel (230) as a gain value for adjusting a switch of the power source;
wherein the controller adjusts the power from the power sources of the driving wheels (310a, 310b) by calculating the parameters like the rotation rates of the driving wheels (310a, 310b) and the free wheel (230), and an instantaneous gyration center (C3) of the electric vehicle (300) is determined by the average steering angle ($\delta_{ave}$) of the driving wheels (310a, 310b) and the steering angle ($\delta_T$) of the free wheel (230), wherein a theoretical, rotation rate of each driving wheel (310a, 310b) is calculated according to the instantaneous gyration center (C3) and the rotation rate of the free wheel (230), and the controller controls the rotation rates of the driving wheels (310a, 310b) according to the expected vehicle speed corresponding to the rotation rate of the free wheel (230) regarded as a gain value and the rotation rates of the driving wheels (310a, 310b) acquired by the sensor units (240).

8. The electric vehicle (300) as recited in claim 7, wherein the power sources of the driving wheels (310a, 310b) are conventional motors or in-wheel hub motors.

9. The electric vehicle (300) as recited in claim 7, wherein the average normal direction (D7) of the driving wheels (310a, 310b) that are rotating and the normal direction (D3) of the free wheel (230) that is rotating are extended to intersect to define the instantaneous gyration center (C3).

10. The electric vehicle (300) as recited in claim 7, wherein the theoretical rotation rate of each of the driving wheels (310a, 310b) is equal to the rotation rate of the free wheel (230) multiplied by the distance ($R_i$) between the driving wheel (310a) and the instantaneous gyration center (C2), and then divided by the distance ($R_T$) between the free wheel (230) and the instantaneous gyration center (C2).

11. A control method capable of controlling an electric vehicle (200) comprising two driving wheels (210a, 210b), a steered wheel (220), a free wheel (230) and a controller, the control method comprising:

inputting an expected vehicle speed into the controller;
sensing the steering angle ($\delta_f$) of the steered wheel (220), the rotation rates of the driving wheels (210a, 210b) and the steering angle ($\delta_T$) and the rotation rate of the free wheel (230), wherein the rotation rate of the free wheel (230) corresponds to a speed of the electric vehicle (200) and the expected vehicle speed corresponds to the rotation rate of the free wheel (230) as a gain value for adjusting a switch of the power source;
determining an instantaneous gyration center (C2) of the electric vehicle (200) according to the steering angle ($\delta_f$) of the steered wheel (220) and the steering angle ($\delta_T$) of the the free wheel (230);
calculating the theoretical rotation rates of the driving wheels (210a, 210b), wherein the theoretical rotation rate of each driving wheel (210a, 210b) is calculated according to the instantaneous gyration center (C2) and the rotation rate of the free wheel (230); and
adjusting the power from the power sources of the driving wheels (210a, 210b) to control the rotation rates of the driving wheels (210a, 210b) according to the expected vehicle speed corresponding to the rotation rate of the free wheel (230) regarded as gain value and the rotation rates of the driving wheels (210a, 210b) aquired by the sensor units (240).

12. The control method as recited in claim 11, wherein the normal direction (D3) of the free wheel (230) that is rotating and the normal direction (D2) of the steered wheel (220) that is rotating are extended to intersect to define the instantaneous gyration center (C2), and the theoretical rotation rate of each of the driving wheels (210a, 210b) is calculated based on an instantaneous center method by the controller to be equal to the rotation rate of the free wheel (230) multiplied by the distance ($R_i$) between the driving wheel (210a) and the instantaneous gyration center (C2), then divided by the distance ($R_T$) between the free wheel (230) and the instantaneous gyration center (C2) and then multiplied by the cosine of the angle ($\alpha$) between the tangential direction (D4) of the centrode of the driving wheel (210a) and the traveling direction (D6) of the electric vehicle (200).

13. A control method capable of controlling an electric vehicle (300) comprising two driving wheels (310a, 310b), a free wheel (230) and a controller, the control method comprising:

inputting an expected vehicle speed into the controller;
sensing the steering angles ($\delta_i$, $\delta_0$) and the rotation rates of the driving wheels (310a, 310b) and the steering angle ($\delta_T$) and the rotation rate of the free wheel (230), wherein the rotation rate of the free wheel (230) corresponds to a speed of the electric vehicle (300) and the expected vehicle speed corresponds to the rotation rate of the free wheel (230) as a gain value for adjusting a switch of the power source;
determining an instantaneous gyration center (C3) of the electric vehicle (300) according to the average steering angle ($\delta_i$, $\delta_0$) of the driving wheels (310a, 310b) and the steering angle ($\delta_T$) of the the free wheel (230);
calculating a theoretical rotation rates of the driving wheels (310a, 310b), wherein the theoretical rotation rate of each driving wheel (310a, 310b) is calculated according to the instantaneous gyration center (C3) and the rotation rate of the free wheel (230); and
adjusting the power from the power sources of the driving wheels (310a, 310b) to control the rotation rates of the driving wheels (310a, 310b) according to the expected vehicle speed corresponding to the rotation rate of the free wheel (230) regarded as gain value and the rotation rates of the driving wheels (310a, 310b) aquired by the sensor units (240).

14. The control method as recited in claim 13, wherein the average normal direction (D7) of the driving wheels (310a, 310b) that are rotating and the normal direction (D3) of the free wheel (230) that is rotating are extended to intersect to define the instantaneous gyration center (C3), and the theoretical rotation rate of each of the driving wheels (310a, 310b) is calculated based on an instantaneous center method by the controller to be equal to the rotation rate of the free wheel (230) multiplied by the distance ($R_i$) between the driving wheel (310a) and the instantaneous gyration center (C3), then divided by the distance ($R_T$) between the free wheel (230) and the instantaneous gyration center (C3).

**EP 2 133 232 B1**

**Patentansprüche**

1.  Elektrisches Fahrzeug (200) umfassend:

    zwei Antriebsräder (210a, 210b) mit jeweils unabhängiger Antriebsquelle;
    ein gelenktes Rad (220), das unter Kontrolle steuern kann;
    ein freies Rad (230), das eine Umdrehungsgeschwindigkeit aufweist und das frei entsprechend der Bewegung des elektrischen Fahrzeuges (200) lenken kann;
    einen Kontroller, der die Leistung der Antriebsquellen der Antriebsräder (210a, 210b) anpassen und eine erwartete Fahrzeuggeschwindigkeit erreichen kann; und
    eine Vielzahl von Sensoreinheiten (240), die in der Lage sind, die Umdrehungsgeschwindigkeiten der Antriebsräder (210a, 210b), den Lenkwinkel ($\delta_f$) des gelenkten Rades (220) und die Umdrehungsgeschwindigkeit und den Lenkwinkel ($\delta_T$) des freien Rades (230) zu erfassen und zum Kontroller zu übertragen, wobei die Umdrehungsgeschwindigkeit des freien Rades (230) einer Geschwindigkeit des elektrischen Fahrzeuges (200) entspricht und die erwartete Fahrzeuggeschwindigkeit der Umdrehungsgeschwindigkeit des freien Rades (230) als ein Nutzwert zur Anpassung einer Schaltung der Antriebsquelle entspricht, wobei
    der Kontroller die Leistung der Antriebsquellen der Antriebsräder (210a, 210b) durch die Berechnung der Parameter, wie die Umdrehungsgeschwindigkeiten der Antriebsräder (210a, 210b) und des freien Rades (230), anpasst, und eine augenblickliche Drehachse des elektrischen Fahrzeuges (200) durch den Lenkwinkel ($\delta_f$) des gelenkten Rades (220) und den Lenkwinkel ($\delta_T$) des freistehenden Rades (230) bestimmt wird, wobei eine theoretische Umdrehungsgeschwindigkeit für jedes Antriebsrad (210a, 210b) entsprechend der augenblicklichen Drehachse (C2) und der Umdrehungsgeschwindigkeit des freistehenden Rades (230) berechnet wird, und wobei der Kontroller die Umdrehungsgeschwindigkeiten der Antriebsräder (210a, 210b) entsprechend der erwarteten Fahrzeuggeschwindigkeit gemäß der Umdrehungsgeschwindigkeit des freien Rades (230) als einem Nutzwert und der Umdrehungsgeschwindigkeiten der Antriebsräder (210a, 210b), welche durch die Sensoreinheiten (240) erfasst werden, kontrolliert.

2.  Elektrisches Fahrzeug (200) nach Anspruch 1, wobei die Antriebsquellen der Antriebsräder (210a, 210b) herkömmliche Motoren oder integrierte Radnabenantriebe sind.

3.  Elektrisches Fahrzeug (200) nach Anspruch 1, wobei die Normalenrichtung (D3) des freien Rades (230), das sich dreht, und die Normalenrichtung (D2) des gelenkten Rades (220), das sich dreht, bis zu ihrem Schnittpunkt verlängert werden, um die augenblickliche Drehachse (C2) zu bestimmen.

4.  Elektrisches Fahrzeug (200) nach Anspruch 1, wobei die theoretische Umdrehungsgeschwindigkeit jedes Antriebsrades (210a, 210b) gleichzusetzen ist mit der Umdrehungsgeschwindigkeit des freien Rades (230) multipliziert mit dem Abstand ($R_i$) zwischen dem Antriebsrad (210a) und der augenblicklichen Drehachse (C2), dann geteilt durch den Abstand ($R_T$) zwischen dem freien Rad (230) und der augenblicklichen Drehachse (C2), dann multipliziert mit dem Cosinus des Winkels ($\alpha$) zwischen der tangentialen Richtung (D4) der Zentrode des Antriebsrades (210a) und der Fahrtrichtung (D6) des elektrischen Fahrzeuges (200).

5.  Elektrische Fahrzeug (200) nach Anspruch 1, wobei das gelenkte Rad (220) ferner eine unabhängige Antriebsquelle umfasst, wobei die Sensoreinheiten (240) die Umdrehungsgeschwindigkeit des gelenkten Rades (220) erfassen können, wobei der Kontroller die Leistung der Antriebsquelle des gelenkten Rades (220) durch die Berechnung der Parameter, wie die Umdrehungsgeschwindigkeiten des gelenkten Rades (220) und des freien Rades (230), anpasst und die theoretische Umdrehungsgeschwindigkeit des gelenkten Rades (220) basierend auf einem Verfahren gemäß dem augenblicklichen Zentrum berechnet wird, um die Leistung der Antriebsquelle des gelenkten Rades (220) anzupassen, wobei die Antriebsquelle ein integrierter Radnabenantrieb oder ein konventioneller Motor ist.

6.  Elektrisches Fahrzeug (200) nach Anspruch 5, wobei die theoretische Umdrehungsgeschwindigkeit des gelenkten Rades (220) gleichzusetzen ist mit der Umdrehungsgeschwindigkeit des freistehenden Rades (230) multipliziert mit dem Abstand ($R_f$) zwischen dem gelenkten Rad (220) und der augenblicklichen Drehachse (C2), geteilt durch den Abstand ($R_T$) zwischen dem freien Rad (230) und der augenblicklichen Drehachse (C2).

7.  Elektrisches Fahrzeug (300), das umfasst:

    zwei Antriebsräder (310a, 310b) mit jeweils unabhängiger Antriebsquelle, welche kontrolliert lenkbar sind;
    ein freies Rad (230), das eine Umdrehungsgeschwindigkeit aufweist und das frei entsprechend der Bewegung des elektrischen Fahrzeuges (300) steuern kann;

einen Kontroller, der die Leistung der Antriebsquellen der Antriebsräder (310a, 310b) anpassen und eine erwartete Fahrzeuggeschwindigkeit erreichen kann; und

eine Vielzahl von Sensoreinheiten (240), die Umdrehungsgeschwindigkeiten der Antriebsräder (310a, 310b), die Lenkwinkel ($\delta_i$, $\delta_0$) der Antriebsräder (310a, 310b) und die Umdrehungsgeschwindigkeit und den Lenkwinkel ($\delta_T$) des freien Rades (230) zu erfassen und zum Kontroller zu übertragen, wobei die Umdrehungsgeschwindigkeit des freien Rades (230) einer Geschwindigkeit des elektrischen Fahrzeuges (300) entspricht und die erwartete Fahrzeuggeschwindigkeit der Umdrehungsgeschwindigkeit des freien Rades (230) als einem Nutzwert für die Anpassung einer Schaltung der Antriebsquelle entspricht;

wobei der Kontroller die Leistung der Antriebsquellen der Antriebsräder (310a, 310b) durch die Berechnung der Parameter, wie die Umdrehungsgeschwindigkeiten der Antriebsräder (310a, 310b) und des freien Rades (230), anpasst, und eine augenblicklichen Drehachse (C3) des elektrischen Fahrzeuges (300) durch den durchschnittlichen Lenkwinkel ($\delta_{ave}$) der Antriebsräder (310a, 310b) und den Lenkwinkel ($\delta_T$) des freien Rades (230) bestimmt wird, wobei eine theoretische Umdrehungsgeschwindigkeit für jedes Antriebsrad (310a, 310b) entsprechend der augenblicklichen Drehachse (C3) und der Umdrehungsgeschwindigkeit des freien Rades (230) berechnet wird, und wobei der Kontroller die Umdrehungsgeschwindigkeiten der Antriebsräder (310a, 310b) entsprechend der erwarteten Fahrzeuggeschwindigkeit gemäß der Umdrehungsgeschwindigkeit des freien Rades (230) als Nutzwert und den Umdrehungsgeschwindigkeiten der Antriebsräder (310a, 310b) kontrolliert, welche durch die Sensoreinheiten (240) erfasst werden.

8. Elektrisches Fahrzeug (300) nach Anspruch 7, wobei die Antriebsquellen der Antriebsräder (310a, 310b) herkömmliche Motoren oder integrierte Radnabenantriebe sind.

9. Elektrisches Fahrzeug (300) nach Anspruch 7, wobei die durchschnittliche Normalenrichtung (D7) der Antriebsräder (310a, 310b), die sich drehen, und die Normalenrichtung (D3) des freien Rades (230), das sich dreht, bis zu ihrem Schnittpunkt verlängert werden, um die augenblickliche Drehachse (C3) zu bestimmen.

10. Elektrisches Fahrzeug (300) nach Anspruch 7, wobei die theoretische Umdrehungsgeschwindigkeit von jedem der Antriebsräder (310a, 310b) gleich der Umdrehungsgeschwindigkeit des freien Rades (230) multipliziert mit dem Abstand ($R_i$) zwischen dem Antriebsrad (310a) und der augenblicklichen Drehachse (C3) und dann geteilt durch den Abstand ($R_T$) zwischen dem freien Rad (230) und der augenblicklichen Drehachse (C3) ist.

11. Kontrollverfahren, das ein elektrisches Fahrzeug (200) kontrollieren kann, welches zwei Antriebsräder (210a, 210b), ein gelenktes Rad (220), ein freies Rad (230) und einen Kontroller beinhaltet, wobei das Kontrollverfahren umfasst:

Eingabe einer erwarteten Fahrzeuggeschwindigkeit in den Kontroller;

Erfassung des Lenkwinkels ($\delta_f$) des gelenkten Rades (220), der Umdrehungsgeschwindigkeiten der Antriebsräder (210a, 210b) sowie des Lenkwinkels ($\delta_T$) und der Umdrehungsgeschwindigkeit des freien Rades (230), wobei die Umdrehungsgeschwindigkeit des freien Rades (230) einer Geschwindigkeit des elektrischen Fahrzeugs (200) entspricht und die erwartete Fahrzeuggeschwindigkeit der Umdrehungsgeschwindigkeit des freien Rades (230) als Nutzwert entspricht, um eine Schaltung der Antriebsquelle einzustellen;

Bestimmung einer augenblicklichen Drehachse (C2) des elektrischen Fahrzeugs (200) gemäß dem Lenkwinkel ($\delta_f$) des gelenkten Rades (220) und dem Lenkwinkel ($\delta_T$) des freien Rades (230);

Berechnung der theoretischen Umdrehungsgeschwindigkeiten der Antriebsräder (210a, 210b), wobei die theoretische Umdrehungsgeschwindigkeit von jedem Antriebsrad (210a, 210b) gemäß der augenblicklichen Drehachse (C2) und der Umdrehungsgeschwindigkeit des freien Rades (230) berechnet wird; und

Anpassung der Leistung der Antriebsquellen der Antriebsräder (210a, 210b), um die Umdrehungsgeschwindigkeiten der Antriebsräder (210a, 210b) gemäß der erwarteten Fahrzeuggeschwindigkeit entsprechend der Umdrehungsgeschwindigkeit des freien Rades (230) als Nutzwert und den Umdrehungsgeschwindigkeiten der Antriebsräder (210a, 210b), welche durch die Sensoreinheiten (240) erfasst werden, einzustellen.

12. Kontrollverfahren nach Anspruch 11, wobei die Normalenrichtung (D3) des freien Rades (230), das sich dreht, und die Normalenrichtung (D2) des gelenkten Rades (220), das sich dreht, bis zu ihrem Schnittpunkt verlängert werden, um die augenblickliche Drehachse (C2) zu bestimmen, und wobei die theoretische Umdrehungsgeschwindigkeit von jedem Antriebsrad (210a, 210b) durch den Kontroller basierend auf einem Verfahren eines augenblicklichen Zentrums berechnet wird, sodass sie gleich der Umdrehungsgeschwindigkeit des freien Rades (230) multipliziert mit dem Abstand ($R_i$) zwischen dem Antriebsrad (210a) und der augenblicklichen Drehachse (C2), dann geteilt durch den Abstand ($R_T$) zwischen dem freien Rad (230) und der augenblicklichen Drehachse (C2) und dann multipliziert mit dem Cosinus des Winkels ($\alpha$) zwischen der tangentialen Richtung (D4) der Zentrode des Antriebsrades (210a) und der Fahrtrichtung (D6) des elektrischen Fahrzeuges (200) ist.

13. Kontrollverfahren, das ein elektrisches Fahrzeug (300) kontrollieren kann, welches zwei Antriebsräder (310a, 310b), ein freies Rad (230) und einen Kontroller umfasst, wobei das Kontrollverfahren umfasst:

Eingabe einer erwarteten Fahrzeuggeschwindigkeit in den Kontroller;
Erfassung der Lenkwinkels ($\delta_i$, $\delta_0$) und der Umdrehungsgeschwindigkeiten der Antriebsräder (310a, 310b) sowie des Lenkwinkels ($\delta_T$) und der Umdrehungsgeschwindigkeit des freien Rades (230), wobei die Umdrehungsgeschwindigkeit des freien Rades (230) einer Fahrzeuggeschwindigkeit für das elektrische Fahrzeug (300) entspricht und wobei die erwartete Fahrzeuggeschwindigkeit der Umdrehungsgeschwindigkeit des freien Rades (230) als Nutzwert entspricht, um eine Schaltung der Antriebsquelle einzustellen;
Bestimmung einer augenblicklichen Drehachse (C3) für das elektrische Fahrzeug (300) gemäß dem durchschnittlichen Lenkwinkel ($\delta_{ave}$) der Antriebsräder (310a, 310b) und dem Lenkwinkel ($\delta_T$) des freien Rades (230);
Berechnung der theoretischen Umdrehungsgeschwindigkeiten der Antriebsräder (310a, 310b), wobei die theoretische Umdrehungsgeschwindigkeit jedes Antriebsrads (310a, 310b) gemäß der augenblicklichen Drehachse (C3) und der Umdrehungsgeschwindigkeit des freien Rades (230) berechnet wird; und
Anpassung der Leistung der Antriebsquellen der Antriebsräder (310a, 310b), um die Umdrehungsgeschwindigkeiten der Antriebsräder (310a, 310b) gemäß der erwarteten Fahrzeuggeschwindigkeit entsprechend der Umdrehungsgeschwindigkeit des freien Rades (230) als Nutzwert und den Umdrehungsgeschwindigkeiten der Antriebsräder (310a, 310b), welche durch die Sensoreinheiten (240) erfasst werden, einzustellen.

14. Kontrollverfahren nach Anspruch 13, wobei die durchschnittliche Normalenrichtung (D7) der Antriebsräder (310a, 310b), die sich drehen, und die Normalenrichtung (D3) des freien Rades (230), das sich dreht, bis zu ihrem Schnittpunkt verlängert werden, um die augenblickliche Drehachse (C3) zu bestimmen, und wobei die theoretische Umdrehungsgeschwindigkeit von jedem der Antriebsräder (310a, 310b) durch den Kontroller basierend auf einem Verfahren eines augenblicklichen Zentrums berechnet wird, sodass sie gleich der Umdrehungsgeschwindigkeit des freien Rades (230) multipliziert mit dem Abstand ($R_i$) zwischen dem Antriebsrad (310a) und der augenblicklichen Drehachse (C3), dann geteilt durch den Abstand ($R_T$) zwischen dem freien Rad (230) und der augenblicklichen Drehachse (C3), ist.

**Revendications**

1. Véhicule électrique (200) comprenant :

deux roues motrices (210a, 210b) ayant respectivement une source d'électricité indépendante,
une roue directrice (220) qui est apte à la direction en étant commandée,
une roue libre (230) qui a un taux de rotation et qui est capable de direction libre selon le mouvement du véhicule électrique (200),
un régulateur qui est apte à ajuster l'électricité des sources d'électricité des roues motrices (210a, 210b) et à recevoir une vitesse prévue d'un véhicule et
une pluralité d'unités de détecteur (240) qui sont aptes à détecter et à transférer les taux de rotation des roues motrices (210a, 210b), l'angle de braquage ($\delta_f$) de la roue directrice (220) et le taux de rotation et l'angle de braquage ($\delta_T$) de la roue libre (230) au régulateur, le taux de rotation de la roue libre (230) correspondant à une vitesse du véhicule électrique (200) et la vitesse prévue du véhicule correspondant au taux de rotation de la roue libre (230) comme valeur de gain pour ajuster un commutateur de la source d'électricité, le régulateur ajustant l'électricité des sources d'électricité des roues motrices (210a, 210b) en calculant les paramètres comme les taux de rotation des roues motrices (210a, 210b) et de la roue libre (230) et un centre instantané de rotation du véhicule électrique (200) étant déterminé par l'angle de braquage ($\delta_f$) de la roue directrice (220) et l'angle de braquage ($\delta_T$) de la roue libre (230), un taux de rotation théorique de chaque roue motrice (210a, 210b) étant calculé selon le centre instantané de rotation (C2) et le taux de rotation de la roue libre (230), et le régulateur commandant les taux de rotation des roues motrices (210a, 210b) selon la vitesse prévue du véhicule correspondant au taux de rotation de la roue libre (230) considéré comme valeur de gain et les taux de rotation des roues motrices (210a, 210b) acquis par les unités de détecteur (240).

2. Véhicule électrique (200) selon la revendication 1 dans lequel les sources d'électricité des roues motrices (210a, 210b) sont des moteurs traditionnels ou des moteurs de moyeu.

3. Véhicule électrique (200) selon la revendication 1 dans lequel la direction normale (D3) de la roue libre (230) qui est en rotation et la direction normale (D2) de la roue directrice (220) qui est en rotation sont étendues pour se couper pour définir le centre instantané de rotation (C2).

4. Véhicule électrique (200) selon la revendication 1 dans lequel le taux de rotation théorique de chacune des roues motrices (210a, 210b) est égal au taux de rotation de la roue libre (230) multiplié par la distance ($R_{*1}$) entre le roue motrice (210a) et le centre instantané de rotation (C2), puis divisé par la distance ($R_T$) entre la roue libre (230) et le centre instantané de rotation (C2), puis multiplié par le cosinus de l'angle ($\alpha$) entre la direction tangentielle (D4) du centrode de la roue motrice (210a) et la direction de déplacement (D6) du véhicule électrique (200).

5. Véhicule électrique (200) selon la revendication 1 dans lequel la roue directrice (220) comprend de plus une source d'électricité indépendante, les unités de détecteur (240) sont aptes à détecter le taux de rotation de la roue directrice (220), le régulateur ajuste l'électricité de la source d'électricité de la roue directrice (220) en calculant les paramètres comme les taux de rotation de la roue directrice (220) et de la roue libre (230) et le taux de rotation théorique de la roue directrice (220) est calculé sur la base d'un procédé de centre instantané pour ajuster l'électricité de la source d'électricité de la roue directrice (220), la source d'électricité étant un moteur de moyeu ou un moteur traditionnel.

6. Véhicule électrique (200) selon la revendication 5 dans lequel le taux de rotation théorique de la roue directrice (220) est égal au taux de rotation de la roue libre (230) multiplié par la distance ($R_f$) entre la roue directrice (220) et le centre instantané de rotation (C2), puis divisé par la distance ($R_T$) entre la roue libre (230) et le centre instantané de rotation (C2).

7. Véhicule électrique (300) comprenant :

deux roues motrices (310a, 310b) ayant respectivement une source d'électricité indépendante et étant aptes à diriger en étant commandées,
une roue libre (230) qui a un taux de rotation et qui est capable de direction libre selon le mouvement du véhicule électrique (300),
un régulateur qui est apte à ajuster l'électricité des sources d'électricité des roues motrices (310a, 310b) et à recevoir une vitesse prévue d'un véhicule et
une pluralité d'unités de détecteur (240) qui sont aptes à détecter et à transférer les taux de rotation des roues motrices (310a, 310b), les angles de braquage ($\delta_i$, $\delta_0$) des roues motrices (310a, 310b) et le taux de rotation et l'angle de braquage ($\delta_T$) de la roue libre (230) au régulateur, le taux de rotation de la roue libre (230) correspondant à une vitesse du véhicule électrique (300) et la vitesse prévue du véhicule correspondant au taux de rotation de la roue libre (230) comme valeur de gain pour ajuster un commutateur de la source d'électricité, le régulateur ajustant l'électricité des sources d'électricité des roues motrices (310a, 310b) en calculant les paramètres comme les taux de rotation des roues motrices (310a, 310b) et de la roue libre (230) et un centre instantané de rotation (C3) du véhicule électrique (300) étant déterminé par l'angle de braquage moyen ($\delta_{avc}$) des roues motrices (310a, 310b) et l'angle de braquage ($\delta_T$) de la roue libre (230), un taux de rotation théorique de chaque roue motrice (310a, 310b) étant calculé selon le centre instantané de rotation (C3) et le taux de rotation de la roue libre (230) et le régulateur ajustant les taux de rotation des roues motrices (310a, 310b) selon la vitesse prévue du véhicule correspondant au taux de rotation de la roue libre (230) considéré comme valeur de gain et les taux de rotation des roues motrices (310a, 310b) acquis par les unités de détecteur (240).

8. Véhicule électrique (300) selon la revendication 7 dans lequel les sources d'électricité des roues motrices (310a, 310b) sont des moteurs traditionnels ou des moteurs de moyeu.

9. Véhicule électrique (300) selon la revendication 7 dans lequel la direction normale moyenne (D7) des roues motrices (310a, 310b) qui sont en rotation et la direction normale (D3) de la roue libre (230) qui est en rotation sont étendues pour se couper pour définir le centre instantané de rotation (C3).

10. Véhicule électrique (300) selon la revendication 7 dans lequel le taux de rotation théorique de chacune des roues motrices (310a, 310b) est égal au taux de rotation de la roue libre (230) multiplié par la distance ($R_i$) entre la roue motrice (310a) et le centre instantané de rotation (C2) et ensuite divisé par la distance ($R_T$) entre la roue libre (230) et le centre instantané de rotation (C2).

11. Procédé de commande apte à commander un véhicule électrique (200) comprenant deux roues motrices (210a, 210b), une roue directrice (220), une roue libre (230) et un régulateur, le procédé de commande comprenant :

l'entrée d'une vitesse prévue du véhicule dans le régulateur,

la détection de l'angle de braquage ($\delta_f$) de la roue directrice (220), des taux de rotation des roues motrices (210a, 210b) et de l'angle de braquage ($\delta_T$) de la roue libre (230), le taux de rotation de la roue libre (230) correspondant à une vitesse du véhicule électrique (200) et la vitesse prévue du véhicule correspondant au taux de rotation de la roue libre (230) comme valeur de gain pour ajuster un commutateur de la source d'électricité,

la détermination d'un centre instantané de rotation (C2) du véhicule électrique (200) selon l'angle de braquage ($\delta_f$) de la roue directrice (220) et l'angle de braquage ($\delta_T$) de la roue libre (230),

le calcul des taux de rotation théoriques des roues motrices (210a, 210b), le taux de rotation théorique de chaque roue motrice (210a, 210b) étant calculé selon le centre instantané de rotation (C2) et le taux de rotation de la roue libre (230) et

l'ajustage de l'électricité des sources d'électricité des roues motrices (210a, 210b) pour commander les taux de rotation des roues motrices (210a, 210b) selon la vitesse prévue du véhicule correspondant au taux de rotation de la roue libre (230) considéré comme valeur de gain et les taux de rotation des roues motrices (210a, 210b) acquis par les unités de détecteur (240).

**12.** Procédé de commande selon la revendication 11 dans lequel la direction normale (D3) de la roue libre (230) qui est en rotation et la direction normale (D2) de la roue directrice (220) qui est en rotation sont étendues pour se couper pour définir le centre instantané de rotation (C2) et le taux de rotation théorique de chacune des roues motrices (210a, 210b) est calculé sur la base d'un procédé de centre instantané par le régulateur pour être égal au taux de rotation de la roue libre (230) multiplié par la distance ($R_i$) entre la roue motrice (210a) et le centre instantané de rotation (C2), ensuite divisé par la distance ($R_T$) entre la roue libre (230) et le centre instantané de rotation (C2) et ensuite multiplié par le cosinus de l'angle ($\alpha$) entre la direction tangentielle (D4) du centrode de la roue motrice (210a) et la direction de déplacement (D6) du véhicule électrique (200).

**13.** Procédé de commande apte à commander un véhicule électrique (300) comprenant deux roues motrices (310a, 310b), une roue libre (230) et un régulateur, le procédé de commande comprenant :

l'entrée d'une vitesse prévue du véhicule dans le régulateur,

la détection des angles de braquage ($\delta_i$, $\delta_0$) et les taux de rotation des roues motrices (310a, 310b) et l'angle de braquage ($\delta_T$) et le taux de rotation de la roue libre (230), le taux de rotation de la roue libre (230) correspondant à une vitesse du véhicule électrique (300) et la vitesse prévue du véhicule correspondant au taux de rotation de la roue libre (230) comme valeur de gain pour ajuster un commutateur de la source d'électricité,

la détermination d'un centre instantané de rotation (C3) du véhicule électrique (300) selon l'angle de braquage moyen ($\delta_i$, $\delta_0$) des roues motrices (310a, 310b) et l'angle de braquage ($\delta_T$) de la roue libre (230),

le calcul des taux de rotation théoriques des roues motrices (310a, 310b), dans lequel le taux de rotation théorique de chaque roue motrice (310a, 310b) est calculé selon le centre instantané de rotation (C3) et le taux de rotation de la roue libre (230) et

l'ajustage de l'électricité des sources d'électricité des roues motrices (310a, 310b) pour commander les taux de rotation des roues motrices (310a, 310b) selon la vitesse prévue du véhicule correspondant au taux de rotation de la roue libre (230) considéré comme valeur de gain et les taux de rotation des roues motrices (310a, 310b) acquis par les unités de détecteur (240).

**14.** Procédé de commande selon la revendication 13 dans lequel la direction normale moyenne (D7) des roues motrices (310a, 310b) qui sont en rotation et la direction normale (D3) de la roue libre (230) qui est en rotation sont étendues pour se couper pour définir le centre instantané de rotation (C3) et le taux de rotation théorique de chacune des roues motrices (310a, 310b) est calculé sur la base d'un procédé de centre instantané par le régulateur pour être égal au taux de rotation de la roue libre (230) multiplié par la distance ($R_i$) entre la roue motrice (310a) et le centre instantané de rotation (C3), ensuite divisé par la distance ($R_T$) entre la roue libre (230) et le centre instantané de rotation (C3).

FIG.1

# FIG.2A

200

# FIG.2B

200

FIG.3A                    300

FIG.3B     <u>300</u>

| Input an expected vehicle speed into a controller | $\sim$ S11 |

| Sense the steering angle of a steering wheel, the rotation rates of at least two driving wheels and the steering angle and the rotation rate of a free wheel | $\sim$ S12 |

| Determine an instantaneous gyration center of an electric vehicle according to the steering angle of the steering wheel and the steering angle of the free wheel | $\sim$ S13 |

| Calculate theoretical rotation rates of the driving wheels | $\sim$ S14 |

| Adjust the power from the power sources of the driving wheels to control the rotation rates of the driving wheels | $\sim$ S15 |

# FIG.4A

```
┌─────────────────────────────────────┐
│   Input an expected vehicle speed into a  │~ S21
│              controller              │
└─────────────────────────────────────┘
                    │
                    ▼
┌─────────────────────────────────────┐
│  Sense the steering angles and the rotation rates  │
│  of at least two driving wheels and the steering   │~ S22
│   angle and the rotation rate of a free wheel      │
└─────────────────────────────────────┘
                    │
                    ▼
┌─────────────────────────────────────┐
│  Determine an instantaneous gyration center of  │
│  an electric vehicle according to the average   │~ S23
│  steering angle of the driving wheels and the   │
│       steering angle of the free wheel          │
└─────────────────────────────────────┘
                    │
                    ▼
┌─────────────────────────────────────┐
│     Calculate theoretical rotation rates of the    │
│              driving wheels              │~ S24
└─────────────────────────────────────┘
                    │
                    ▼
┌─────────────────────────────────────┐
│  Adjust the power from the power sources of the  │
│  driving wheels to control the rotation rates of │~ S25
│               the driving wheels                │
└─────────────────────────────────────┘
```

# FIG.4B

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080040011 A1
- JP 2007022301 A
- WO 2007136122 A

- EP 1905675 A1
- EP 0982220 A2
- DE 102007029427 A1